# EUROPEAN PATENT APPLICATION

(11) **EP 2 020 811 A1**
(43) Date of publication of application: **04.02.2009**
(21) Application number: 07253018.1
(22) Date of filing: 01.08.2007
(51) Int. Cl.: H04M 1/66, H04M 19/04

(54) **Telephone terminal**

(71) Applicant: British Telecommunications Public Limited Company, London EC1A 7AJ (GB)
(72) Inventor: Harrison, Matthew James Clear, London E3 2PF (GB); Plumbe, Cian Sandor, Barbican, London (GB)
(74) Representative: Lidbetter, Timothy Guy Edwin

(57) **Abstract**

A telephone user terminal has a register of a set of CLI codes stored (39) in response to a user input (37). When an incoming call attempt is made (21), the CLI code of the current call attempt is compared (23) with the CLI codes in the register, and the response of the user terminal to the call attempt is modified (step 25) if the CLI code of the current call attempt matches a CLI code in the register. This allows the handset to filter calls, e.g. by not ringing in response to calls from persistent nuisance callers.

## Description

Many enhanced services are provided by telephone service providers to allow users to make better use of the telephone service. One such service is "calling line identity", which allows a called party to identify the telephone number from which an incoming call originates. The number may be displayed on the handset itself, or subsequently retrieved from the network provider by dialling a special code ("1471" in the United Kingdom) to access a voice announcement of the last number to have called.

This service is popular, but does require the called party to identify the called party from the number displayed or announced. Some handsets allow a "phonebook" library of selected numbers to be stored with associated names such that the name is displayed instead of the number.

Another service which is offered is the facility to block "nuisance" calls: that is to say, unwelcome calls, for example from over-persistent salesmen, unwelcome admirers or the like. In a typical service of this kind, such as BT's "Choose to Refuse" service, a user may enter a special code (14258 - 1 HALT) during or after such a call, which will cause the telephone switching system to divert further calls from the same number to a voice message informing the caller that the called party is not accepting calls. As this function takes place in the network, it will operate even if the caller's number has been withheld. Alternatively, if the number to be blocked is known, a code may be entered at any time, followed by the number to be blocked.

A disadvantage of many such enhanced services is that they require the user to remember a sequence of key strokes in order to operate the service, and also to recognise and remember telephone numbers. However, many of the most vulnerable members of society, who would benefit most from such services, find it difficult to learn and remember complex functions, and may also find the operation of a keypad difficult. It is the intention of this invention to provide the means to perform a simple and easily-learned process to identify pre-selected callers.

According to the invention, there is provided a telephone user terminal having means to respond to a call attempt, identify calling line identity (CLI) codes transmitted to it during the course of a call attempt, register means to store a set of CLI codes, means to transfer the CLI code of the most recent call attempt to the register in response to a user input, means to compare the CLI code of a current call attempt with the CLI codes in the register, and means to modify the response of the user terminal to the call attempt if the CLI code of the current call attempt matches a CLI code in the register.

Typically, the normal response to a call attempt would be for the user terminal to generate an audible tone or ring to alert the user to the call attempt. The modified response may be for a light to flash indicating that the calling party is one of those in the register. This light may be in addition to, or instead of, the usual audible alert. If the knowledge that such call attempts are being made could be distressing to the called party, the modification to the response may be that the user terminal does not generate an alert at all when call attempts from such numbers are received.

The means to transfer the CLI to the register may be provided by a special key on the user terminal. The user just has to press this key during a call to activate the process.

In one embodiment the invention is incorporated in a conventional telephone handset, but it may instead be incorporated in a separate unit connected between the handset and the network termination. This may be preferred, particularly for a user who is familiar with a particular handset and its functions and wishes to continue to use it.

Embodiments of the invention will now be described, by way of example, with reference to the drawings, in which
Figure 1 is a diagrammatic overall view of a first embodiment of the invention
Figure 2 is a diagrammatic overall view of a second embodiment of the invention
Figure 3 is a schematic diagram illustrating in more detail the functional elements of the embodiments: these elements are common to both embodiments
Figure 4 is a flow diagram illustrating the process by which the embodiment operates.

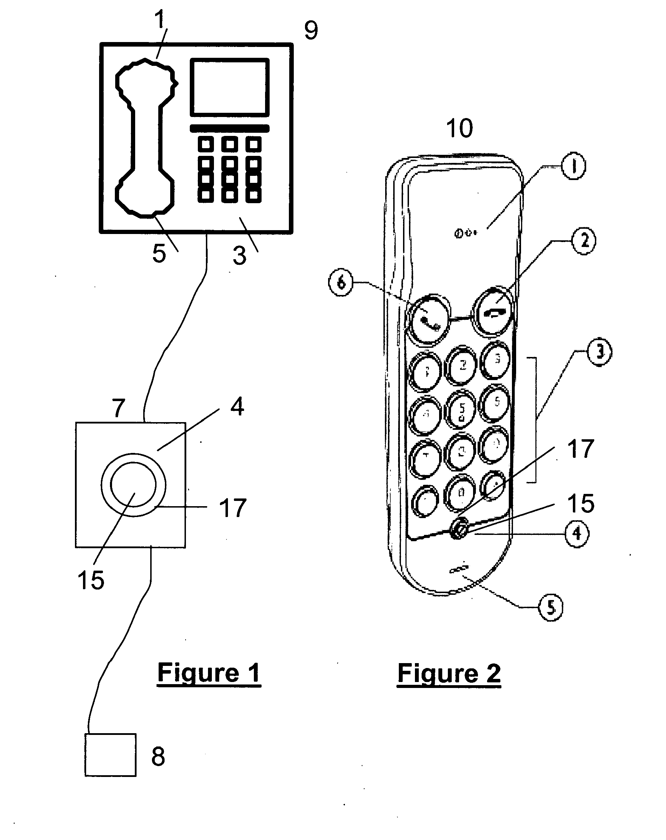

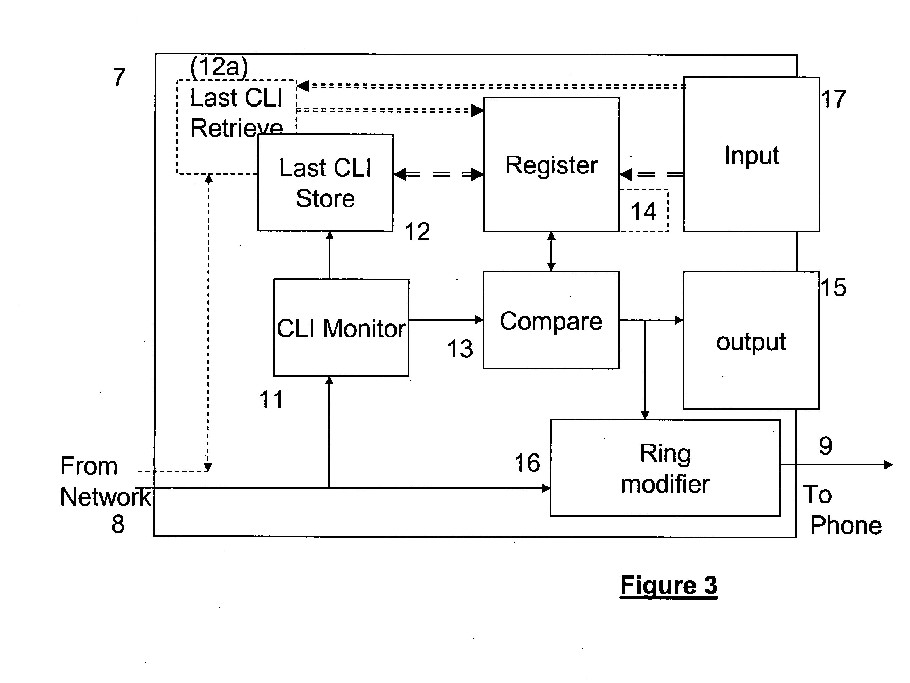

Figure 1 shows a first embodiment of the invention, comprising a dedicated unit 7 incorporating the components necessary to the invention, shown in more detail in Figure 3. The unit 7 has an input device 15 and an output device 17 - as shown these are both incorporated into an illuminated key 4. The unit 7 is connected to a telephone network through a termination point 8 and to a conventional telephone 9, the telephone having a loudspeaker 1, a microphone 5, and a keyboard 3.

Figure 2 illustrates a second embodiment of the invention, wherein the necessary components are incorporated into a telephone handset 10. As before, this has an input device 15 and an output device 17, both incorporated into an illuminated key 4, a loudspeaker 1, a microphone 5, and a keyboard 3. As shown, it is a cordless handset, so it also has "on-hook" and "off-hook" keys 2, 6.

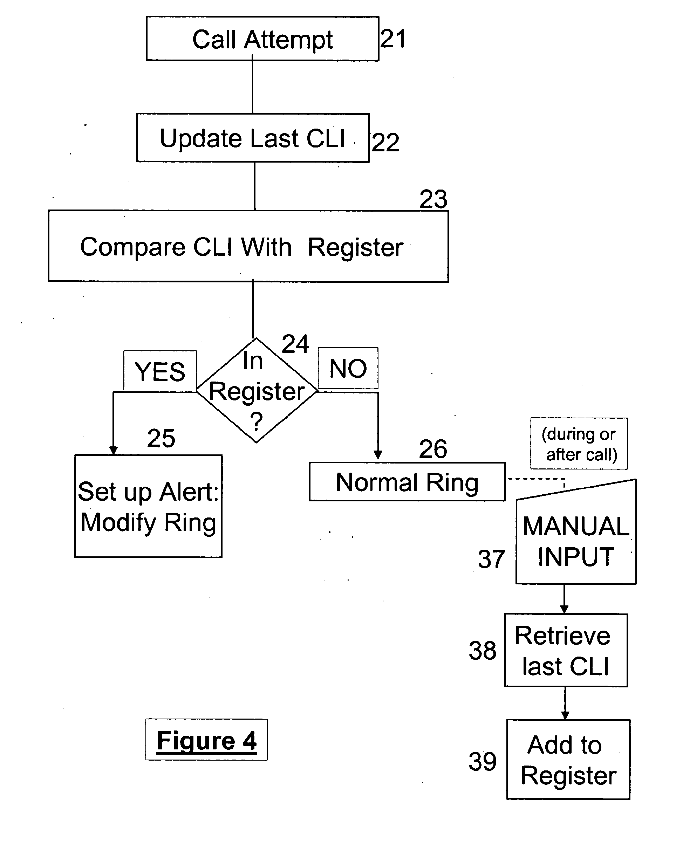

The components of the device 7, 10 that contribute to the operation of the invention are shown in Figure 3. These are interposed between the network connection 8 and the telephone handset 9 itself, or (in the embodiment of Figure 2) on the network side of the conventional components of the handset 10. These components, whose operation will be discussed with reference to Figure 4, comprise the manual input device 17 and output device 15 already discussed, together with a monitoring means 11 for identifying the calling line identity (CLI) signal associated with an incoming call attempt, a data store 12 for recording the CLI associated with the most recent call attempt, a register 14 for selectively storing CLIs in response to inputs from the input device 17, a comparator for comparing a CLI detected by the monitor 11 with the contents of the register 14. In addition to the external output 15 (or instead of it), provision may be made to modify the call attempt signals transmitted to the telephone handset 9 itself, for example to prevent the telephone from ringing.

The content of the "last CLI" register 12 may be retrieved by the user in order to identify the last caller. The register 12 may also record more than one previous caller, allowing the call history to be studied.

In an alternative arrangement, the "last CLI" register 12 is replaced by a retrieval means 12a responsive to the key 17 to interrogate the network to retrieve the last CLI, for example by using the "1471" facility available in UK telephone systems.

The operation of the invention will now be described with reference to Figures 3 and 4. On detecting a call attempt 21, the CLI monitor 11 extracts the CLI signal and, if the handset has a "last CLI" store 12, the CLI is recoded therein (step 22) overwriting the CLI of the previous call. The monitor passes the CLI to the comparator 13, which determines whether the CLI is one of those already stored in the register 14 (step 24). If the incoming CLI is in the register 14, the comparator it generates a "special response" 25 causing the output 15 and/or ring modifier 16 to operate, thereby alerting the user that the caller is one of those whose identity has previously been stored in the register 14. (Or, if the ring modifier 16 is arranged to suppress the ringing current, to prevent the user being alerted to the presence of the unwanted call).

If the CLI is not in the register 14, (step 24), the call attempt is responded to in the normal manner (step 26), and the output 15 responds in a different way - for example illuminating in a different colour, or not illuminating at all.

If during the progress of a call, or subsequent to the call ending, the user decides to flag the caller as meriting the special response 25 should he call again, the user activates the input 17 (step 37). This causes the last CLI to be retrieved (step 28) and placed in the register 14 (step 29), such that future call attempts from the same party will be met by the special response 25 instead of the normal response 26. The retrieval (step 28) may either be from a network-based store using a retrieval unit 12a, or from an internal "last CLI" store 12.

Provision may be made for the user to clear the last entry in the register 14, or all entries, in the register by a special keystroke, for example by maintaining the key 4 pressed for a predetermined period.

Although the invention is intended to be used to identify unwanted or "nuisance" callers, the scope of the invention is not limited to this. The class of callers to be treated to the "special response" 25 lies entirely within the control of the user.

## Claims

1. A telephone user terminal having means to respond to a call attempt, means to identify calling line identity (CLI) codes transmitted to it during the course of a call attempt, register means to store a set of CLI codes, means to transfer the CLI code of the most recent call attempt to the register in response to a user input, means to compare the CLI code of a current call attempt with the CLI codes in the register, and means to modify the response of the user terminal to the call attempt if the CLI code of the current call attempt matches a CLI code in the register.

2. A telephone user terminal according to claim 1, wherein the modified response is a flashing light.

3. A telephone user terminal according to claim 1 or claim 2, wherein the modified response is in addition to the usual audible alert.

4. A telephone user terminal according to claim 1 or claim 2, wherein the modified response operates instead of the usual audible alert.

5. A telephone user terminal according to claim 4, wherein the modification to the response is that the user terminal does not generate an alert at all when call attempts from such numbers are received.

6. A telephone user terminal according to any preceding claim, provided with a key operable during a call to cause the transfer of the most recent CLI to the register.

7. A telephone user terminal according to claim 6, comprising means responsive to the key to retrieve the CLI of the most recent call attempt from a network-based data store.

8. A telephone user terminal according to claim 6, comprising a store for the CLI of the most recent call attempt, and means responsive to the key to access the store and transfer its contents to the register.

9. A telephone user terminal according to any preceding claim incorporated in a conventional telephone handset.

10. A telephone user terminal according to any of claims 1 to 8, forming a unit connectable between a network termination and a conventional handset to modify the behaviour of the conventional handset.
